# EUROPEAN PATENT APPLICATION

(11) **EP 4 368 005 A1**
(43) Date of publication of application: **15.05.2024**
(21) Application number: 23196493.3
(22) Date of filing: 11.09.2023
(51) Int. Cl.: A01D 34/00, A01D 34/84, A01D 34/86

(54) **A ROBOTIC LAWN MOWER WITH ENHANCED CUTTING PROPERTIES**

(30) Priority: 08.11.2022 SE 2251302
(71) Applicant: Husqvarna AB, 561 82 Huskvarna (SE)
(72) Inventor: HOLGERSSON, Jonas, 561 40 HUSKVARNA (SE)

(57) **Abstract**

The present disclosure relates to a robotic lawn mower (100) comprising a body (140), at least two drive wheels (130a, 130b) arranged along a drive wheel axis (145) with a center (146) that is positioned between the drive wheels (130a, 130b). The robotic lawn mower (100) further comprises a control unit (110) and at least a first rotatable grass cutting disc (160). When the robotic lawn mower (100) is approaching a boundary (220) of an operation area (610), the control unit (110) is adapted to
- position the robotic lawn mower (100a) such that there is a shortest distance (dₛ) between the center (146) and the boundary (220), and to
- control the drive wheels (130a, 130b) to turn in mutually different directions such that the second end portion (102) of the robotic lawn mower (100a, 100b, 100c) performs an arcuate movement along a cutting arc (210), enabling the first cutting disc (160) to cut grass within the cutting arc (210).

The boundary (220) is positioned between a border (139) and the operation area (610), and where the shortest distance (dₛ) admits the cutting arc (210) to have a closest arc portion (211) that is closest to the border (139) without passing the border (139).

## Description

### TECHNICAL FIELD

The present disclosure relates to a robotic lawn mower that is adapted to operate within a certain operation area. The robotic lawn mower comprises a body, at least two drive wheels, at least one swivelable wheel, a control unit adapted to control the operation of the robotic lawn mower, and a first rotatable grass cutting disc having a rotation axis.

### BACKGROUND

Robotic lawn mowers such as for example robotic lawn mowers are becoming increasingly more popular. A robotic lawn mower is usually battery-powered by means of a rechargeable battery and is adapted to cut grass on a user's lawn automatically. The robotic lawn mower can be charged automatically without intervention of the user, and does not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary does in this case not be defined by a physical wire, but by an imaginary boundary.

A problem associated with robotic lawn mowers is that they normally have a limited ability to cut grass close to objects and borders that may lie outside a cutting area boundary that may be defined by means of a boundary wire. That is, normally, the cutting unit is arranged at an underside of a lawn mower body of the robotic lawn mower and portions of the lawn mower body, and/or wheels attached thereto, may hinder the cutting unit from reaching grass close to objects and borders. If so, the cutting result is impaired because there will be uncut grass close to object such as trees, stones, furniture, building walls, and the like. At the same time, cutting outside a lawn edge should be prevented, irrespective of angle of approach towards a border.

### SUMMARY

The object of the present disclosure is to provide means and a method for cutting grass close to objects and borders, while preventing cutting outside a border such as a lawn edge, irrespective of angle of approach towards a cutting area boundary.

This object is achieved by means of a robotic lawn mower comprising a body, at least two drive wheels that form a pair of drive wheels arranged along a drive wheel axis with a center, the center being positioned between the drive wheels in the pair. The robotic lawn mower further comprises at least one swivelable wheel, a control unit adapted to control the operation of the robotic lawn mower, at least a first rotatable grass cutting disc having a rotation axis. A first end portion is facing a forward travelling direction and a second end portion is facing a reverse travelling direction. When the robotic lawn mower, during grass cutting in an operation area, is approaching a boundary of the operation area, the control unit is adapted to position the robotic lawn mower such that there is a shortest distance between the center and the boundary, and to control the drive wheels to turn in mutually different directions such that the second end portion of the robotic lawn mower performs an arcuate movement along a cutting arc, enabling the first cutting disc to cut grass within the cutting arc.

The boundary is positioned between a border and the operation area, where the shortest distance admits the cutting arc to have a closest arc portion that is closest to the border without passing the border.

In this way, cutting the grass relatively close to a border is enabled without cutting outside the border irrespective of angle of approach for the robotic lawn mower.

According to some aspects, the control unit is adapted to position the robotic lawn mower such that there is a shortest distance between the center and the boundary by furthermore being arranged to control the robotic lawn mower to move towards the boundary such that the first end portion at least partly passes the boundary, where the boundary is determined to have a certain straight extension where the first end portion has crossed the boundary, and to determine a smallest angle between the forward travelling direction and the extension. If the smallest angle exceeds a certain threshold value, the control unit is adapted to control the robotic lawn mower to move back a certain rearward distance towards the operation area such there is a shortest distance between the center and the boundary.

This means that the robotic lawn mower can be positioned such that there is a shortest distance between the center and the boundary if a boundary wire is used for defining the boundary.

According to some aspects, if the smallest angle falls below the threshold value, the control unit is adapted to position the robotic lawn mower such that there is a shortest distance between the center and the boundary by furthermore being arranged to control the robotic lawn mower to move back towards the operation area. When the robotic lawn mower has moved a certain extended rearward distance that exceeds the rearward distance, there is a shortest distance between the center and the boundary.

In this way, if the smallest angle falls below the threshold value, cutting the grass relatively close to a border is enabled anyway without cutting outside the border by increasing the rearward distance to an extended rearward distance.

According to some aspects, if the smallest angle falls below the threshold value, the control unit is adapted to position the robotic lawn mower such that there is a shortest distance between the center and the boundary by furthermore being arranged to control the robotic lawn mower to move back towards the operation area such that the smallest angle between the forward travelling direction and the extension, when the first end portion passes the boundary, exceeds the threshold value, such that there is a shortest distance between the center and the boundary.

This means that the robotic lawn mower is controlled to move back towards the operation area in such a way that the smallest angle now exceeds the threshold value. Moving back in such a manner can be accomplished in many ways

According to some aspects, a center of the cutting arc is positioned along the drive wheel axis. According to some further aspects, a center of the cutting arc is positioned in the center of the drive wheel axis.

This is the case when the drive wheels are driven in different rotation directions and at the same rotation velocities by the first electric motor arrangement.

According to some aspects, the cutting arc has an angular extension that exceeds 180°, where the control unit is adapted to control the robotic lawn mower to continue moving when a second end center, constituting a rearmost point, that has followed the extension of the cutting arc has reached an end of the cutting arc.

This means that the robotic lawn mower will continue moving at an angle to the original angle of approach, away from the boundary. This in turn enables the robotic lawn mower to repeat the above procedure, performing arcuate movements, such that a continuous grass edge close to the boundary is cut. This can be performed in combination with cutting the rest of the grass on the lawn.

According to some aspects, when the robotic lawn mower has moved back towards the operation area such that there is a shortest distance between the center and the boundary, the center is positioned within the operation area.

This means that that before the robotic lawn mower performs an arcuate movement along a cutting arc, it has moved such that the center is positioned within the operation area.

According to some aspects, the control unit is adapted to position the robotic lawn mower such that there is a predetermined shortest distance between the center and the boundary. According to some further aspects, the control unit is adapted to position the robotic lawn mower by means of input derived from a navigation sensor arrangement comprised in the robotic lawn mower.

This means that the robotic lawn mower can be positioned for performing an arcuate movement along a cutting arc according to the above directly, without first having to detect a boundary wire and then move back to the position.

According to some aspects, the navigation sensor arrangement comprises at least one of satellite signal navigation sensor; and deduced reckoning sensors.

According to some aspects, the navigation sensor arrangement comprises deduced reckoning sensors that include visual sensors for Simultaneous Localization And Mapping (SLAM) navigation.

According to some aspects, the navigation sensor arrangement is adapted for navigation by means of active local radio beacons using Ultra Wide Band (UWB).

According to some aspects, the robotic lawn mower comprises at least two electric motor arrangements, where at least two drive wheels have a drive wheel axis with a center and are drivably connected to a first electric motor arrangement. At least one swivelable wheel has a corresponding swivel axis, where a swivel attachment axis, running through at least one swivel axis and being parallel to the drive wheel axis, is positioned between the second end portion and the drive wheel axis. The first cutting disc is drivably connected to a second electric motor arrangement, where the first cutting disc at least partly is positioned between the swivel attachment axis and the second end portion.

In this way, the first cutting disc is positioned such that it can move laterally in an arcuate manner when the drive wheels are driven in different rotation directions by the first electric motor arrangement. This enables the first cutting disc to reach relatively close to a border.

According to some aspects, the rotation axis is positioned between the swivel attachment axis and the second end portion when the rotation axis passes through the cutting disc.

In this manner, the cutting disc can easily follow the movement of the second end portion, in particular when the drive wheels are driven in different rotation directions by the first electric motor arrangement.

According to some aspects, the robotic lawn mower further comprises a first arcuate protective wall that at least partly runs along the second end portion, and at least one further arcuate protective wall. The protective walls extend from the body towards the ground during normal running, the protective walls being radially separated.

According to some aspects, the protective walls are partly positioned between the first cutting disc and the ground during normal running.

This means that the protective walls confer an injury protection for humans and animals that come close to the second end portion during normal running.

According to some aspects, the protective walls at least mainly follow respective protective wall arcs, where all protective wall arcs have a common center.

In this way, when the arcuate movement is performed, the grass will not be bent when moving between the protective walls.

According to some aspects, the common center is the center of a drive wheel axis.

The present disclosure also relates to methods, control unit arrangements and computer program products that are associated with above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a top view of a robotic lawn mower;
- Figure 2: shows a bottom view of the robotic lawn mower;
- Figure 3: shows a side perspective bottom view of the robotic lawn mower;
- Figure 4: shows a side perspective bottom view of an enlarged part the robotic lawn mower;
- Figure 5: shows a side view of the robotic lawn mower;
- Figure 6: shows a schematic top view of a lawn mower approaching a boundary wire at a first angle of incidence;
- Figure 7: shows a schematic top view of a lawn mower moving back according to a first example;
- Figure 8: shows a schematic top view of a movement pattern of the robotic lawn mower;
- Figure 9: shows a schematic top view of a lawn mower approaching a boundary wire at a second angle of incidence;
- Figure 10: shows a schematic top view of a lawn mower moving back according to a second example;
- Figure 11: shows a schematic top view of a lawn mower moving back according to a third example;
- Figure 12: shows a schematic top view of a lawn mower moving back according to the third example;
- Figure 13: shows a schematic top view of a lawn mower moving back according to a fourth example;
- Figure 14: shows a schematic top view of a lawn mower moving back according to the fourth example;
- Figure 15: shows a schematic top view of a lawn mower moving back to the operation area according to a fifth example;
- Figure 16: shows a schematic view of a control unit;
- Figure 17: shows a computer program product; and
- Figure 18: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

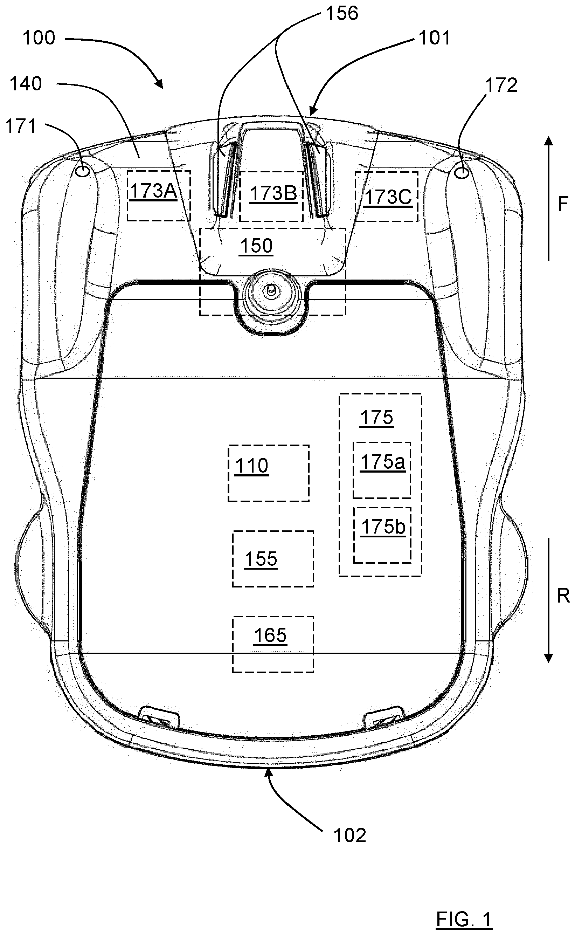

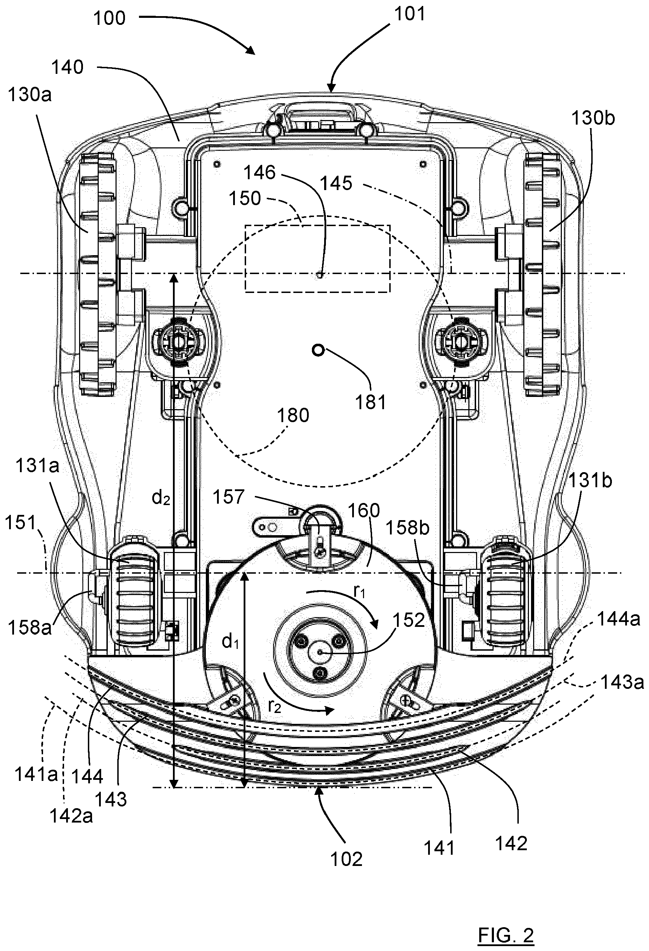

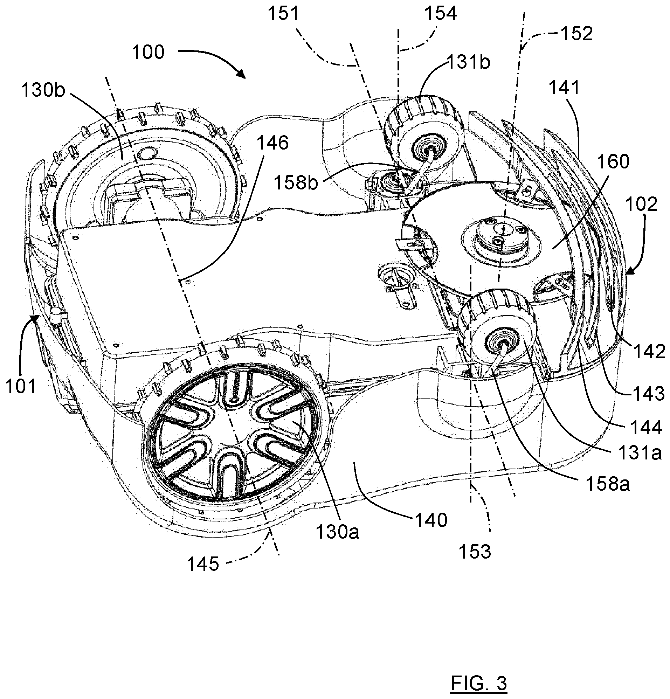

Figure 1 shows a top view of a robotic lawn mower 100, Figure 2 shows a bottom view of the robotic lawn mower 100, and Figure 3 shows a side perspective bottom view of the robotic lawn mower. The robotic lawn mower 100 has a first end portion 101 and a second end portion 102, is adapted for a forward travelling direction F and a reverse travelling direction R. The first end portion 101 is facing the forward travelling direction F and the second end portion 102 is facing the reverse travelling direction R. The robotic lawn mower 100 comprises a body 140, at least two drive wheels 130a, 130b, that form a pair of drive wheels arranged along a drive wheel axis 145 with a center 146, the center 146 being positioned between the drive wheels 130a, 130b in the pair. The robotic lawn mower 100 further comprises at least one swivelable wheel 131a, 131b, a control unit 110 adapted to control the operation of the robotic lawn mower 100, at least a first rotatable grass cutting disc 160 having a rotation axis 152. According to some aspects, least one swivelable wheel has a corresponding swivel axis 153, 154. The drive wheel axis 145 is an imaginary axis, not being constituted by a physical axle that connects the drive wheels.

According to some aspects, as illustrated in this example, the robotic lawn mower 100 comprises four wheels, two larger drive wheels 130a, 130b and two smaller swivelable wheels 131a, 131b that are in form of castor wheels and are arranged to swivel around a corresponding swivel axis 153, 154 when the robotic lawn mower 100 is turning. For this purpose, the swivelable wheels 131a, 131b are connected to the body 140 by means of corresponding swivel wheel holders 158a, 158b, where, according to some aspects, it is the swivel wheel holders 158a, 158b that swivel in relation to the body and are fixed in relation to the swivelable wheels 131a, 131b. The opposite is of course conceivable.

The robotic lawn mower 100 may be a multi-chassis type or a mono-chassis type. A multi-chassis type comprises more than one body parts that are movable with respect to one another. A mono-chassis type comprises only one main body part. In this example embodiment, the robotic lawn mower 100 is of a mono-chassis type, having a main body part 140. The main body part 140 substantially houses all components of the robotic lawn mower 100.

According to some aspects, the robotic lawn mower 100 also comprises at least two electric motor arrangements 150, 165 (only schematically indicated in Figure 2) and at least one rechargeable electric power source such as a battery 155 (only schematically indicated in Figure 1) for providing power to the electric motor arrangements 150, 165. The battery 155 is arranged to be charged by means of received charging current from a charging station, received through charging skids 156 or other suitable charging connectors. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

The drive wheels 130a, 130b, having a drive wheel axis 145 with a center 146 and are drivably connected to a first electric motor arrangement 150. The first electric motor arrangement 150 is adapted to drive the drive wheels 130a, 130b in the same rotation direction, or in different rotation directions, and at different rotational speeds. According to some aspects, the first electric motor arrangement 150 comprises two separate electrical motors, and according to some further aspects each such electric motor is mounted to a corresponding drive wheel 130a, 130b, for example in a corresponding drive wheel hub.

According to some aspects, the first cutting disc 160 is drivably connected to a second electric motor arrangement 165 that in this example is in the form of a cutter motor. According to some aspects, the first cutting disc 160 comprises a plurality of cutting knives 157, in this example three cutting knives 157 are shown (only one indicated in Figure 2). The cutting disc 160 is at least partly positioned between the swivel attachment axis 151 and the second end portion 102. This means that at least some part of the cutting disc 160 is positioned closer to the second end portion 102 than any part of the swivel attachment axis 151.

In this way, the cutting disc 160 is positioned such that it can move laterally in an arcuate manner when the drive wheels 130a, 130b are driven in different rotation directions by the first electric motor arrangement 150.

According to some aspects, the rotation axis 152 is positioned between the swivel attachment axis 151 and the second end portion 102 when the rotation axis 152 passes through the cutting disc 160. In this manner, the cutting disc 160 can easily follow the movement of the second end portion 102, in particular when the drive wheels 130a, 130b are driven in different rotation directions by the first electric motor arrangement 150.

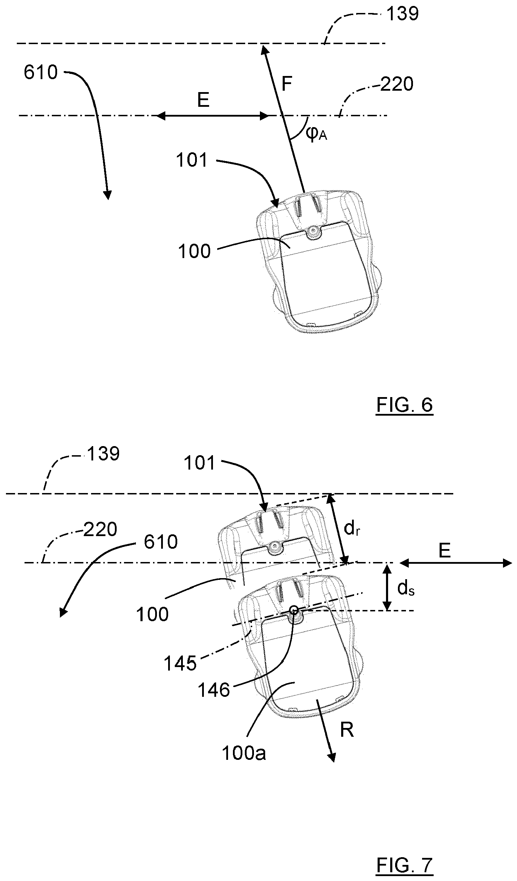

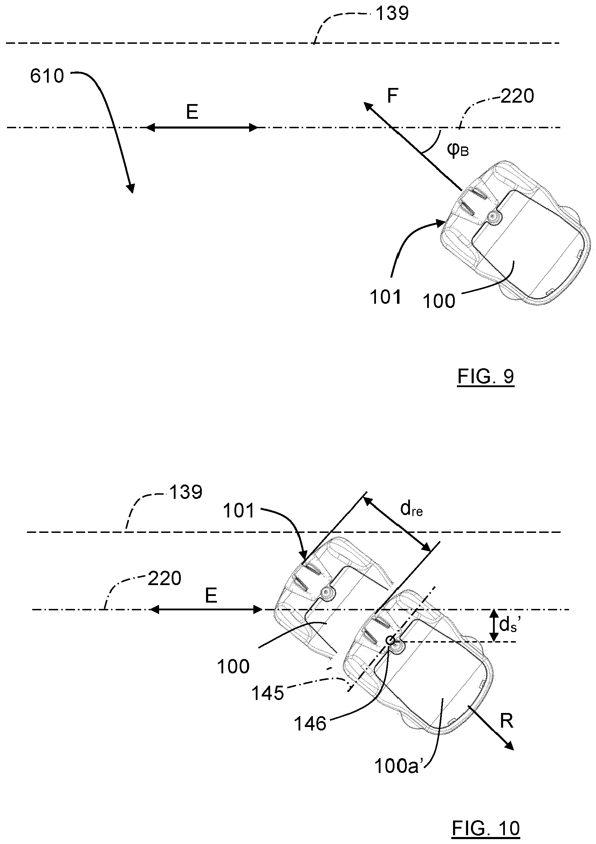

According to the present disclosure, with reference to Figure 6 and Figure 9, when the robotic lawn mower 100, during grass cutting in an operation area 610, is approaching a boundary 220 of the operation area 610, the control unit 110 is adapted to position the robotic lawn mower 100a such that there is a shortest distance dₛ between the center 146 and the boundary 220. The control unit 110 is further adapted to control the drive wheels 130a, 130b to turn in mutually different directions such that the second end portion 102 of the robotic lawn mower 100a, 100b, 100c performs an arcuate movement along a cutting arc 210, enabling the first cutting disc 160 to cut grass within the cutting arc 210. The boundary 220 is positioned between a border 139 and the operation area 610, and where the shortest distance dₛ admits the cutting arc 210 to have a closest arc portion 211 that is closest to the border 139 without passing the border 139.

In this context, the term shortest distance refers to a certain distance that runs the shortest way between the center 146 and the boundary 220. The shortest distance has such properties that the cutting arc 210 has a closest arc portion 211 that is closest to the border 139 without passing the border 139. According to some aspects, the shortest distance can be a predetermined distance, for example given a certain angle of approach towards the boundary 220, alternatively the shortest distance can be an otherwise deduced distance, for example given a certain angle of approach towards the boundary 220.

In this way, cutting the grass relatively close to a border 139 is enabled without cutting outside the border 139 irrespective of angle of approach for the robotic lawn mower 100. In this context, a boundary is a cutting area boundary that according to some aspects is defined by means of a boundary wire, and a border 139 is in the form of an object or a lawn edge 139, and these should not be passed by any part of the robotic lawn mower 100. The cutting arc 210 has a closest arc portion 211 that is closest to the border 139 without passing the border 139.

There is a border distance d_{B} between the border 139 and the boundary 220, the border distance d_{B} for example being between 20cm and 40cm. Other values for the border distance d_{B} are of course conceivable, and the distance d_{B} may vary along the boundary 220. The border 139 can thus be in many forms and still allow a relatively close cutting of the grass by means of robotic lawn mower 100 performing the arcuate movement according to the above.

According to some aspects, the control unit 110 is adapted to position the robotic lawn mower 100a such that there is a shortest distance dₛ between the center 146 and the boundary 220 by furthermore being arranged to control the robotic lawn mower 100a to move towards the boundary 220 such that the first end portion 101 at least partly passes the boundary 220, where the boundary 220 is determined to have a certain straight extension E where the first end portion 101 has crossed the boundary 220. According some aspects, the control unit 110 is adapted to stop the robotic lawn mower 100 at this position.

The control unit 110 is further adapted to determine a smallest angle ϕ_{A}, ϕ_{B} between the forward travelling direction F and the extension E. This means that the robotic lawn mower 100 is approaching the boundary with a certain angle of incidence, in Figure 6 a first angle of incidence, which corresponds to the smallest angle ϕA, and in Figure 9 a second angle of incidence, which corresponds to the smallest angle ϕ_{B}.

According to some aspects, the boundary is in the form of a boundary wire 220 defining the operation area 610 for the robotic lawn mower 100, where the robotic lawn mower 100 comprises at least two boundary wire sensors 173A, 173B, 173C, three boundary wire sensors 173A, 173B, 173C are schematically indicated in Figure 1. By means of the boundary wire sensors 173A, 173B, 173C, the smallest angle ϕ_{A}, ϕ_{B} between the forward travelling direction F and the extension E can be determined by having knowledge of the robotic lawn mower's velocity and the time that passes between when different boundary wire sensors 173A, 173B, 173C pass and detect the boundary wire 220. This means that the boundary 220 is conferred a determined straight extension E at least where the boundary wire sensors 173A, 173B, 173C pass the boundary wire 220.

This means that the robotic lawn mower 100a can be positioned such that there is a shortest distance dₛ between the center 146 and the boundary 220 for the case with a boundary wire defining the boundary.

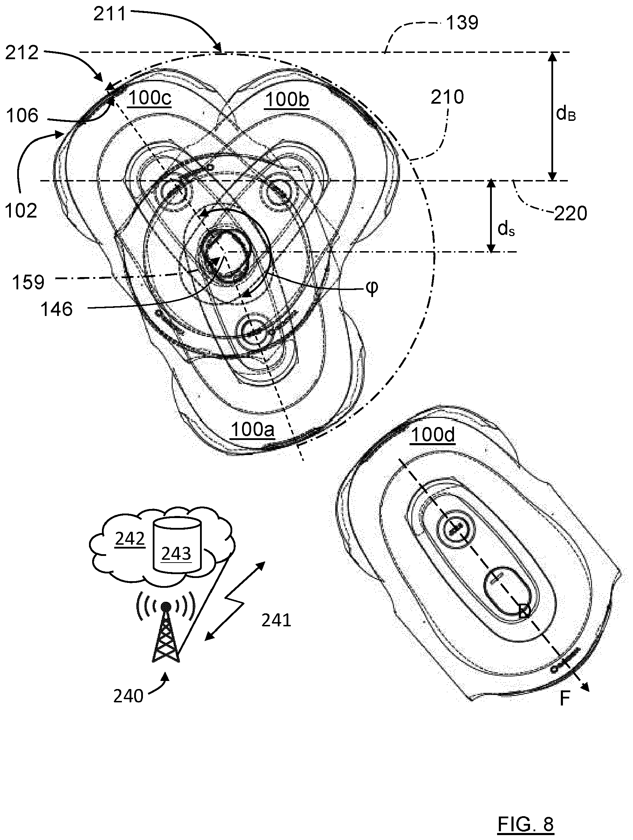

According to some aspects, with reference also to Figure 7 and Figure 8, if the smallest angle ϕ_{A} exceeds a certain threshold value, the control unit 110 is adapted to control the robotic lawn mower 100a to move back a certain rearward distance dᵣ towards the operation area 610 such there is a shortest distance dₛ between the center 146 and the boundary 220. The robotic lawn mower 100a is then in position, and the control unit 110 is adapted to control the drive wheels 130a, 130b to turn in mutually different directions such that the second end portion 102 of the robotic lawn mower 100a, 100b, 100c performs an arcuate movement along a cutting arc 210, enabling the first cutting disc 160 to cut grass within the cutting arc 210. Figure 7 thus illustrates the robotic lawn mower 100 moving back according to a first example.

The wire sensors 173A, 173B, 173C are adapted to sense a boundary wire control signal and/or at least one environment detection device 170, 171 adapted to detect objects. In this example, radar transceivers 170, 171 are provided and adapted to transmit signals and to receive reflected signals that have been reflected by an object. Other environment detection devices such as camera devices, ultrasonic devices and Lidar devices are of curse also conceivable, as alternatives or in any suitable combination.

The control unit 110 is adapted to control the environment detection device 170, 171 and to control the speed and direction of the robotic lawn mower 100 in dependence of information acquired by means of the of the environment detection devices 170, 171 and/or said wire sensor 173A, 173B, 173C when the robotic lawn mower 100 is moving.

According to some aspects, with reference to Figure 9 and Figure 10, if the smallest angle ϕ_{B} falls below the threshold value, the control unit 110 is adapted to control the robotic lawn mower 100a' to move back towards the operation area 610. When the robotic lawn mower 100a' has moved a certain extended rearward distance dᵣₑ that exceeds the rearward distance dᵣ, there is a shortest distance dₛ' between the center 146 and the boundary 220, the robotic lawn mower 100a' is then in position and the control unit 110 is then adapted to control the drive wheels 130a, 130b to turn in mutually different directions such that the second end portion 102 of the robotic lawn mower 100a, 100b, 100c performs an arcuate movement along a cutting arc 210, enabling the first cutting disc 160 to cut grass within the cutting arc 210. Figure 10 thus illustrates the robotic lawn mower 100 moving back according to a second example.

In this way, if the smallest angle ϕ_{B} falls below the threshold value, cutting the grass relatively close to a border 139 is enabled anyway without cutting outside the border 139 by increasing the rearward distance dᵣ to an extended rearward distance dᵣₑ.

According to some aspects, with reference to Figure 9, Figure 11, Figure 12, Figure 13 and Figure 14, if the smallest angle ϕ_{B} falls below the threshold value, the control unit 110 is adapted to control the robotic lawn mower 100 to move back towards the operation area 610 such that the smallest angle ϕ_{C}, ϕ_{D} between the forward travelling direction F and the extension E, when the first end portion 101 passes the boundary 220, exceeds the threshold value, such that there is a shortest distance dₛ", dₛ‴ between the center 146 and the boundary 220.

This means that the robotic lawn mower 100 is controlled to move back towards the operation area 610 in such a way that the smallest angle ϕ_{C}, ϕ_{D} now exceeds the threshold value. Moving back in such a manner can be accomplished in many ways, a few examples are disclosed below.

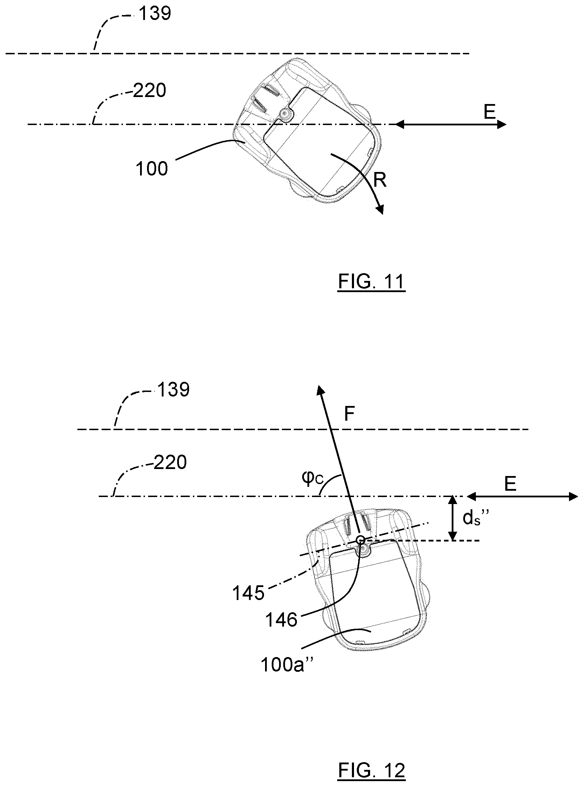

As illustrated in Figure 11 and Figure 12, the robotic lawn mower 100, 100a" is controlled to move in the reverse travelling direction R in an arcuate manner such that the smallest angle changes to a larger value ϕ_{C} than the value ϕ_{B} at the original approach such that there is a shortest distance dₛ" between the center 146 and the boundary 220. Figure 11 and Figure 12 thus illustrate the robotic lawn mower 100 moving back according to a third example.

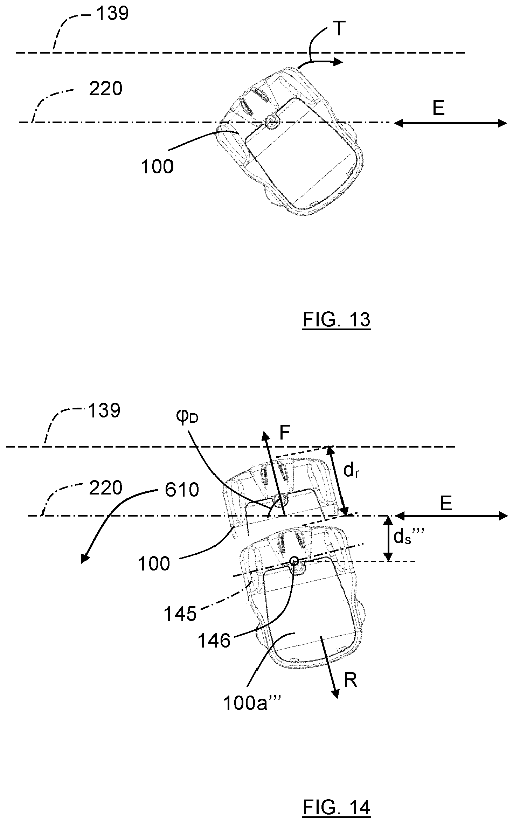

As illustrated in Figure 13 and Figure 14, the robotic lawn mower 100, 100a‴ is controlled to first make a turn T and then move in the reverse travelling direction R in a straight manner such that the smallest angle changes to al larger value ϕ_{D} than the value ϕ_{B} at the original approach such that there is a shortest distance dₛ‴ between the center 146 and the boundary 220. Figure 13 and Figure 14 thus illustrate the robotic lawn mower 100 moving back according to a fourth example.

When the robotic lawn mower 100a", 100a‴ has moved back such that there is a shortest distance dₛ", dₛ‴ between the center 146 and the boundary 220, the robotic lawn mower 100a", 100a‴ is in position. The control unit 110 is then adapted to control the drive wheels 130a, 130b to turn in mutually different directions such that the second end portion 102 of the robotic lawn mower 100a, 100b, 100c performs an arcuate movement along a cutting arc 210, enabling the first cutting disc 160 to cut grass within the cutting arc 210.

In this way, if the smallest angle ϕ_{B} falls below the threshold value, cutting the grass relatively close to a border 139 is enabled anyway without cutting outside the border 139 by increasing the rearward distance dᵣ to an extended rearward distance dᵣₑ.

According to some aspects, a center 159 of the cutting arc 210 is positioned along the drive wheel axis 145. According to some further aspects, the center 159 of the cutting arc 210 is positioned in the center 146 of the drive wheel axis 145. This is the case when the drive wheels 130a, 130b are driven in different rotation directions and at the same rotation velocities by the first electric motor arrangement 150. Of course, this should not be interpreted literally, since small deviations can occur due to motor inaccuracies, uneven ground, uneven ground contact and uneven ground friction. The velocities being the same and the center 159 of the cutting arc 210 being positioned in the center 146 of the drive wheel axis 145 should be interpreted according to what is intended and practically achievable, not to be mathematically exact.

According to some aspects, the cutting arc 210 has an angular extension ϕ that exceeds 180°, where the control unit 110 is adapted to control the robotic lawn mower 100d to continue moving forward when a second end center 106, according to some aspects constituting a rearmost point, that has followed the extension of the cutting arc 210 has reached an end 212 of the cutting arc 210. This means that the robotic lawn mower 100d will continue moving at an angle to the original angle of approach, away from the boundary 182, 220. This in turn enables the robotic lawn mower 100 to repeat the above procedure, performing arcuate movements, such that a continuous grass edge close to the boundary 182, 220 is cut. This can be performed in combination with cutting the rest of the grass on the lawn.

According to some aspects, the lawn mower 100 can be adapted to be set in a mode where only a continuous grass edge close to the boundary 182, 220 is cut, the rest of the lawn not being cut during that time. This mode could be selected by a user.

According to some aspects, when the robotic lawn mower 100 has moved back towards the operation area 610 such that there is a shortest distance dₛ, dₛ', dₛ", dₛ‴ between the center 146 and the boundary 220, the center 146 is positioned within the operation area 610. This means that that before the robotic lawn mower 100a performs an arcuate movement along a cutting arc 210, it has moved such that the center 146 is positioned within the operation area 610.

According to some aspects, the control unit 110 is adapted to position the robotic lawn mower 100a by means of input derived from a navigation sensor arrangement 175 comprised in the robotic lawn mower 100.

This means that the robotic lawn mower 100a can be positioned for performing an arcuate movement along a cutting arc 210 according to the above directly, without first having to detect a boundary wire and then move back to the position 100a.

In some embodiments, the navigation sensor arrangement 175 comprises a satellite signal navigation sensor 175a configured to provide navigational information, such as position, based on receiving one or more signals from a satellite. According to some aspects, the navigation sensor arrangement 175 is adapted for navigation by means of active local radio beacons using Ultra Wide Band (UWB). According to some aspects, the signal navigation sensor 175a may be combined with receiving a signal from a base station or a charging station which can provide active local radio beacons, for example using UWB.

In some embodiments the satellite navigation sensor is a GPS (Global Positioning System) device or other Global Navigation Satellite System (GNSS) device. In some embodiments the satellite navigation sensor 175 is a RTK (Real Time Kinetics) sensor. This enables the robotic lawn mower 100 to operate in the operation area 610 bounded by a virtual boundary, not shown explicitly in Figure 8 but deemed to be included in the boundary 220.

In some embodiments, alone or as a complement to the satellite signal navigation sensor 175a, the navigation sensor arrangement 175 also comprises deduced reckoning sensors 175b. The deduced reckoning sensors 175b may be odometers, accelerometers or other deduced reckoning sensors. In some embodiments the deduced reckoning sensors 175b include visual sensors, such as for Simultaneous Localization And Mapping, SLAM, navigation or other visual navigation. In such embodiments the boundary may be bounded by reference objects, not shown explicitly in any Figure, but deemed to be included in the boundary 220.

In some embodiments, the deduced reckoning sensors 175b are comprised in the propulsion device, wherein a deduced reckoning navigation may be provided by knowing the current supplied to a motor and the time the current is supplied, which will give an indication of the speed and thereby distance for the corresponding wheel.

The deduced reckoning sensors 175b, especially in combination with the visual odometry sensor, enables the root to operate according to a map of the operational area. In some such embodiments, the navigation is based on SLAM, and in some embodiments, where a visual odometry sensor, such as a camera, is utilized, the navigation is based on V-SLAM.

The robotic lawn mower 100 is in some embodiments arranged to operate according to a map application representing one or more operational areas, and possibly the surroundings of the operational area(s) as well as features of the operational area(s) stored in the memory 120 of the robotic lawn mower 100. In some embodiments, the map is also or alternatively stored in the memory of a remote server 243. The map application may be generated or supplemented as the robotic lawn mower 100 operates or otherwise moves around in the operational area. In some embodiments, the map application is downloaded, possibly from the server. In some embodiments, the map application also includes one or more transport areas. The robotic lawn mower 100 is arranged to navigate according to the map based on the navigation sensor arrangement 175.
According to some aspects, there is a swivel attachment axis 151, running through at least one swivel axis 153, 154 and being parallel to the drive wheel axis 145, is positioned between the second end portion 102 and the drive wheel axis 145. This means that a largest first axis distance d₁ between the swivel attachment axis 151 and the second end portion 102 falls below a largest second axis distance d₂ between the drive wheel axis 145 and the second end portion 102. The first cutting disc 160 is at least partly is positioned between the swivel attachment axis 151 and the second end portion 102.

In this way, the first cutting disc 160 is positioned such that it can move laterally in an arcuate manner when the drive wheels 130a, 130b are driven in different rotation directions by the first electric motor arrangement 150. This enables the first cutting disc 160 to reach relatively close to a border 139.

According to some aspects, with reference to Figure 2, Figure 3 and Figure 4, the robotic lawn mower 100 further comprises a first arcuate protective wall 141 that at least partly runs along the second end portion 102, and at least one further arcuate protective wall 142, 143, 144, the protective walls 141, 142, 143, 144 extending from the body 140 towards the ground G during normal running, the protective walls 141, 142, 143, 144 being radially separated.

In this examples, there are four protective walls 141, 142, 143, 144; the first protective wall 141, a second protective wall 142, a third protective walls 14, and a fourth protective wall 144. Since the cutting disc 160 is at least partly positioned between the swivel attachment axis 151 and the second end portion 102, and, according to some aspects, the rotation axis 152 is positioned between the swivel attachment axis 151 and the second end portion 102 when the rotation axis 152 passes through the cutting disc 160, the protective walls 141, 142, 143, 144 confer an injury protection for humans and animals that come close to the second end portion 102 during normal running.

There is a first distance h₁ between the first protective wall 141 and the ground G, where the first distance h₁ of course varies slightly during running. There is a second distance h₂ between the first end portion 101 and the ground G, where the second distance h₂ of course also varies slightly during running. In this example, the first distance h₁ falls below the second distance h₂, and in the case of the first end portion 101 is facing the forward travelling direction F, this means that relatively high grass can enter between the robotic lawn mower 100 and the ground G without being bent, or only being slightly bent, before reaching the cutting disc 160. A spring-back effect for bent grass can need an additional distance and thus also an additional time to bend back.

This is advantageous since this provides a more efficient cut of the grass, and is enabled by having the cutting disc 160 positioned relatively close to the second end portion 102 where the cutting disc 160 is protected by means of the protective walls 141, 142, 143, 144.

According to some aspects, the protective walls 141, 142, 143, 144 are partly positioned between the cutting disc 160 and the ground G during normal running. In this manner, the cutting disc 160 can reach the second end portion 102 while humans and animals that come close to the second end portion 102 during normal running still are protected from injury.

According to some aspects, the protective walls 141, 142, 143, 144 at least mainly follow respective protective wall arcs 141a, 142a, 143a, 144a, where all protective wall arcs 141a, 142a, 143a, 144a have a common center 146. According to some aspects, the common center 146 is the center of the drive wheel axis 145. In this way, when the arcuate movement is performed, the grass will not be bent when moving between the protective walls 141, 142, 143, 144. According to some aspects, the radial separation of the protective walls 141, 142, 143, 144 relates to the common center.

According to some aspects, an arcuate extension of at least one protective wall 141, 142, 143, at least mainly following a respective protective wall arc, comprises tapered end portions 147, 148, 149. In this example, this is the case for the first three protective walls 141, 142, 143, and enables the grass to be easily divided between the protective walls 141, 142, 143, 144 when the arcuate movement is performed.

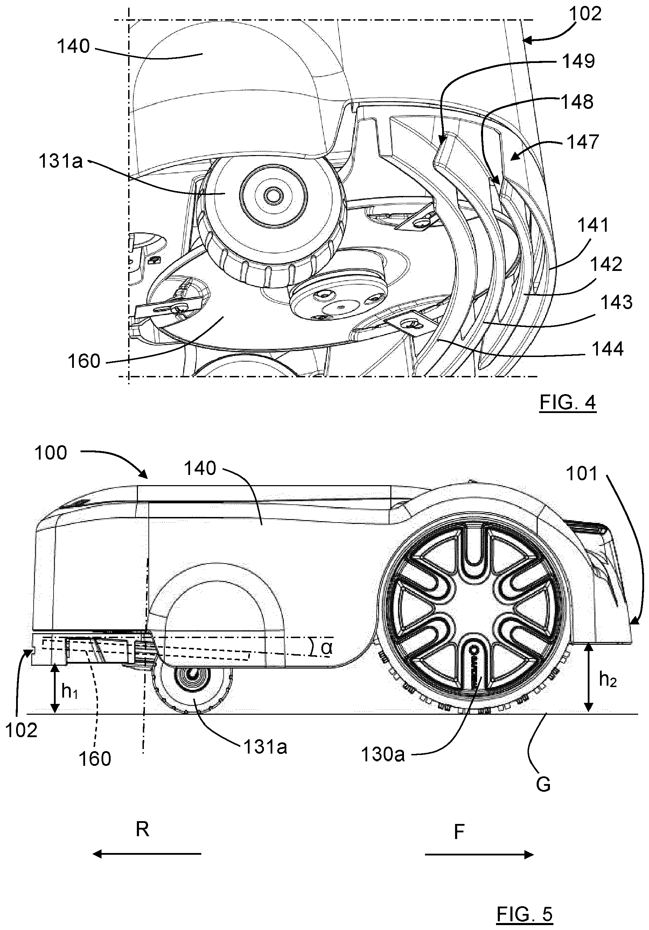

It is to be noted that, according to some aspects, the rotation axis 152 can be tilted with a cutting disc angle of incidence, constituting an angle of approach α as illustrated in Figure 5, towards the ground G. Such a tilt improves the cutting result, the cutting disc 160 being closer to the ground G where the cutting disc 160 faces the forward travelling direction F. In the case where the first end portion 101 is facing the forward travelling direction F and the second end portion 102 is facing the reverse travelling direction R, there is an advantage since the first distance h₁ between the first protective wall 141 and the ground G can be increased.

It is to be noted that all position references to the rotation axis 152 are intended to be considered when the rotation axis 152 passes through the cutting disc 160

According to some aspects, the second electric motor arrangement 165 is positioned closer to the drive wheel axis 145 than to the rotation axis 152. In this way, the weight of the cutter motor 165 is positioned closer to the drive wheels 130a, 130b which will confer an enhanced traction. Some power transfer means is needed in this case for transferring rotational power from the cutter motor 165 to the cutting disc 160. Such power transfer means can for example be in the form of a drive belt, a drive chain or a geared transmission.

As indicated in Figure 8, according to some aspects, the control unit 110 may be adapted to be in contact, suitably by means of wireless communication 241, with external units, for example a communication system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions may be performed by resources in a remote network 242, such as a remote server 243.

The control unit 110 may be constituted by one or more control unit parts that can be separate from each other. Some or all control unit parts may be comprised in a control unit arrangement 110 and/or a remote server 243.

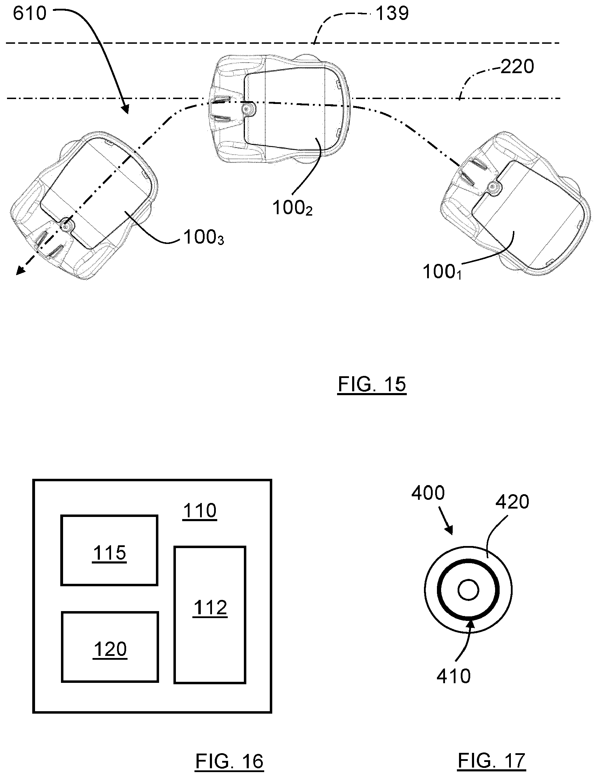

In Figure 16 it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the radar transceivers 170, processing measurements results received via the radar transceivers 170, and the propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 112 for communications with at least one external device such as a user terminal, the remote server 243 and/or a charging station. As such the interface 112 may comprise one or more transmitters and receivers, comprising analogue and digital components and a suitable number of ports for wireline communication. The interface 112 can be adapted for communication with other devices, such as the remote server 243, a charging station, and/or other robotic working tools. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as herein disclosed.

Generally, the present disclosure relates to a control unit arrangement 110 is adapted to execute any of the methods disclosed herein.

Figure 17 shows a computer program product 400 comprising computer executable instructions 410 stored on media 420 to execute any of the methods disclosed herein.

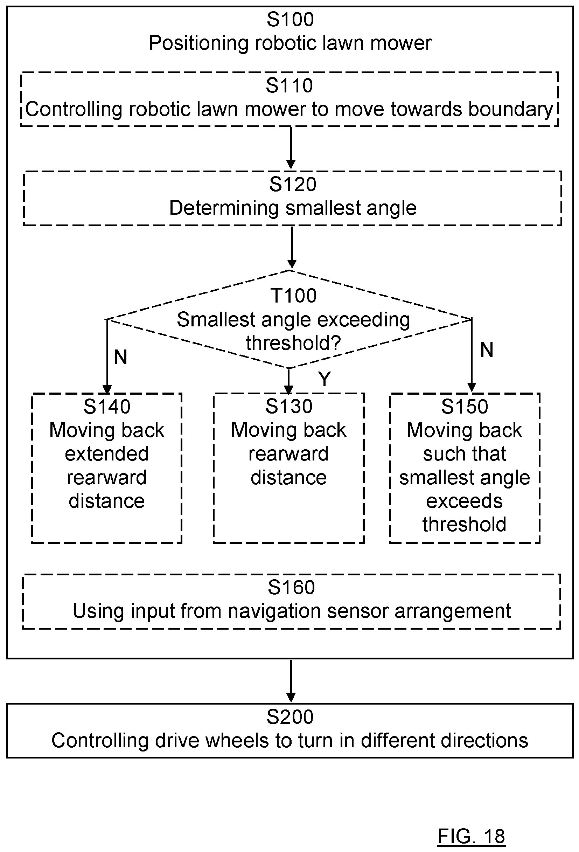

With reference to Figure 18, the present disclosure also relates to a method for controlling a robotic lawn mower 100 having a body 140, at least two drive wheels 130a, 130b that form a pair of drive wheels arranged along a drive wheel axis 145 with a center 146, the center 146 being positioned between the drive wheels 130a, 130b in the pair. A first end portion 101 is facing a forward travelling direction F and a second end portion 102 is facing a reverse travelling direction R. When the robotic lawn mower 100, during grass cutting in an operation area 610, is approaching a boundary 220 of the operation area 610, the method comprises positioning S100 the robotic lawn mower 100a such that there is a shortest distance dₛ between the center 146 and the boundary 220, and controlling S200 the drive wheels 130a, 130b to turn in mutually different directions such that the second end portion 102 of the robotic lawn mower 100a, 100b, 100c performs an arcuate movement along a cutting arc 210, enabling the first cutting disc 160 to cut grass within the cutting arc 210. where the boundary 220 is positioned between a border 139 and the operation area 610, and where the shortest distance dₛ admits the cutting arc 210 to have a closest arc portion 211 that is closest to the border 139 without passing the border 139.

According to some aspects, positioning S100 the robotic lawn mower 100a such that there is a shortest distance dₛ between the center 146 and the boundary 220 comprises controlling S110 the robotic lawn mower 100 to move towards the boundary 220 such that the first end portion 101 at least partly passes the boundary 220, where the boundary 220 is determined to have a certain straight extension E where the first end portion 101 has crossed the boundary 220, and determining S120 a smallest angle ϕ_{A}, ϕ_{B} between the forward travelling direction F and the extension E. If T100 the smallest angle ϕ_{A} exceeds a certain threshold value, the method comprises controlling S130 the robotic lawn mower 100a to move back a certain rearward distance dᵣ towards the operation area 610 such there is a shortest distance dₛ between the center 146 and the boundary 220.

According to some aspects, if T100 the smallest angle ϕ_{B} falls below the threshold value, the method comprises controlling S140 the robotic lawn mower 100a' to move back towards the operation area 610, and, when the robotic lawn mower 100a' has moved a certain extended rearward distance dᵣₑ that exceeds the rearward distance dᵣ, there is a shortest distance dₛ' between the center 146 and the boundary 220.

According to some aspects, if T100 the smallest angle ϕ_{B} falls below the threshold value, the method comprises controlling S150 the robotic lawn mower 100 to move back towards the operation area 610 such that the smallest angle ϕ_{C}, ϕ_{D} between the forward travelling direction F and the extension E, when the first end portion 101 passes the boundary 220, exceeds the threshold value, such that there is a shortest distance dₛ", dₛ‴ between the center 146 and the boundary 220.

According to some aspects, the boundary is in the form of a boundary wire 220 defining the operation area 610 for the robotic lawn mower 100, where the robotic lawn mower 100 comprises at least two boundary wire sensors 173A, 173B, 173C.

According to some aspects, a center 159 of the cutting arc 210 is positioned along the drive wheel axis 145.

According to some aspects, a center 159 of the cutting arc 210 is positioned in the center 146 of the drive wheel axis 145.

According to some aspects, the cutting arc 210 has an angular extension ϕ that exceeds 180°, where the control unit 110 is adapted to control the robotic lawn mower 100d to continue moving when a second end center 106, constituting a rearmost point, that has followed the extension of the cutting arc 210 has reached an end 212 of the cutting arc 210.

According to some aspects, when the robotic lawn mower 100 has moved back towards the operation area 610 such that there is a shortest distance dₛ, dₛ', dₛ", dₛ‴ between the center 146 and the boundary 220, the center 146 is positioned within the operation area 610.

According to some aspects, the method comprises positioning S100 the robotic lawn mower 100a such that there is a predetermined shortest distance dₛ between the center 146 and the boundary 220.

According to some aspects, the method comprises positioning S100 the robotic lawn mower 100a using S160 input derived from a navigation sensor arrangement 175 comprised in the robotic lawn mower 100.

According to some aspects, the navigation sensor arrangement 175 uses at least one of
- satellite signal navigation sensor 175a; and
- deduced reckoning sensors 175b

According to some aspects, the navigation sensor arrangement 175 uses deduced reckoning sensors 175b that include visual sensors for Simultaneous Localization And Mapping, SLAM, navigation.

According to some aspects, the navigation sensor arrangement 175 is used for navigation by means of active local radio beacons using Ultra Wide Band, UWB.

The present disclosure is not limited to the above, but may vary freely within the scope of the appended claims. For example, the first end portion 101 can be facing the reverse travelling direction R and the second end portion 102 can be facing the forward travelling direction F.

The end portions 101, 102 are shown as arcuate portions facing a forward travelling direction F or rearward travelling direction R where, according to some aspects, the first arcuate protective wall 141 constitutes the second end portion 102. According to some aspects, an end portion 101, 102 can be defined as a rearmost of foremost point at the robotic lawn mower 100. According to some aspects, the first end portion 101 is opposite the second end portion 102, each end portion facing a travelling direction.

According to some aspects, the swivel attachment axis 151 runs via the points where the swivelable wheels 131a, 131b are connected to the body 140 by means of corresponding swivel wheel holders 158a, 158b.

According to some aspects and with reference to Figure 2, there is a further cutting disc 180 (only schematically indicated) having a rotational axle 181 positioned between the swivel attachment axis 151 and the drive wheel axis 145. This further cutting disc 180 can constitute a main cutting disc 180 that is operative during normal cutting, the cutting disc 160 possibly being disengaged. When the robotic lawn mower 100 is controlled to cut grass relatively close to a boundary, for example by performing the previously described arcuate movement along a cutting arc, the main cutting disc 180 may be disengaged and the cutting disc 160 is engaged into operation.

According to some aspects, the main cutting disc 180 has a larger diameter, and thus cutting width, than the cutting disc 160. By only using the cutting disc 160 when cutting grass relatively close to a boundary and using the main cutting disc 180 otherwise, energy may be saved and efficiency increased. According to some aspects, the main cutting disc 180 is adjustable with respect to grass cutting height, manually or automatically in previous known manners. This means that the main cutting disc 180 is displaceable such that a distance between the main cutting disc 180 and the ground G can be adjusted,

According to some aspects, in particular for the case where there is a boundary wire that defines a boundary for an operation are 116, there is a robotic lawn mower 100 comprising a body 140, at least two drive wheels 130a, 130b that form a pair of drive wheels arranged along a drive wheel axis 145 with a center 146, the center 146 being positioned between the drive wheels 130a, 130b in the pair. The robotic lawn mower 100 further comprises at least one swivelable wheel 131a, 131b, a control unit 110 adapted to control the operation of the robotic lawn mower 100, at least a first rotatable grass cutting disc 160 having a rotation axis 152. A first end portion 101 is facing a forward travelling direction F and a second end portion 102 is facing a reverse travelling direction R. When the robotic lawn mower 100, during grass cutting in an operation area 610, is approaching a boundary 220 of the operation area 610, the control unit 110 is adapted to control the robotic lawn mower 100 to move towards the boundary 220 such that the first end portion 101 at least partly passes the boundary 220, where the boundary 220 is determined to have a certain straight extension E where the first end portion 101 has crossed the boundary 220, and to determine a smallest angle ϕ_{A}, ϕ_{B} between the forward travelling direction F and the extension E.

If the smallest angle ϕ_{A} exceeds a certain threshold value, the control unit 110 is adapted to control the robotic lawn mower 100a to move back a certain rearward distance dᵣ towards the operation area 610 such there is a shortest distance dₛ between the center 146 and the boundary 220, and to control the drive wheels 130a, 130b to turn in mutually different directions such that the second end portion 102 of the robotic lawn mower 100a, 100b, 100c performs an arcuate movement along a cutting arc 210, enabling the first cutting disc 160 to cut grass within the cutting arc 210,

According to some aspects, the boundary 220 is positioned between a border 139 and the operation area 610, and where the shortest distance dₛ admits the cutting arc 210 to have a closest arc portion 211 that is closest to the border 139 without passing the border 139.

According to some aspects, with reference to Figure 9 and Figure 15, for the above example, if the smallest angle ϕ_{B} falls below the threshold value, the control unit 110 is adapted to control the robotic lawn mower 100₁, 100₂, 100₃ to move towards the operation area 610, and then to continue cutting the lawn. This can be performed by continuing a forward movement in arcuate manner as illustrated in Figure 15, or by reversing, as illustrated in Figure 10, and then continuing cutting the lawn in an ordinary forward movement. Figure 15 thus illustrates the robotic lawn mower 100 moving back to the operation area 610 according to a fifth example.

In this way, the smallest angle ϕ_{B} is considered to be too small to admit cutting the grass relatively close to a border 139 in the manner described above.

Examples of the present disclosure include:
1. A robotic lawn mower (100) comprising a body (140), at least two drive wheels (130a, 130b) that form a pair of drive wheels arranged along a drive wheel axis (145) with a center (146), the center (146) being positioned between the drive wheels (130a, 130b) in the pair, the robotic lawn mower (100) further comprising at least one swivelable wheel (131a, 131b), a control unit (110) adapted to control the operation of the robotic lawn mower (100), at least a first rotatable grass cutting disc (160) having a rotation axis (152), where a first end portion (101) is facing a forward travelling direction (F) and a second end portion (102) is facing a reverse travelling direction (R), wherein, when the robotic lawn mower (100), during grass cutting in an operation area (610), is approaching a boundary (220) of the operation area (610), the control unit (110) is adapted to
   - position the robotic lawn mower (100a) such that there is a shortest distance (dₛ) between the center (146) and the boundary (220), and to
   - control the drive wheels (130a, 130b) to turn in mutually different directions such that the second end portion (102) of the robotic lawn mower (100a, 100b, 100c) performs an arcuate movement along a cutting arc (210), enabling the first cutting disc (160) to cut grass within the cutting arc (210),
   where the boundary (220) is positioned between a border (139) and the operation area (610), and where the shortest distance (dₛ) admits the cutting arc (210) to have a closest arc portion (211) that is closest to the border (139) without passing the border (139).
2. The robotic lawn mower (100) according to example 1, wherein the control unit (110) is adapted to position the robotic lawn mower (100a) such that there is a shortest distance (dₛ) between the center (146) and the boundary (220) by furthermore being arranged to
   - control the robotic lawn mower (100) to move towards the boundary (220) such that the first end portion (101) at least partly passes the boundary (220), where the boundary (220) is determined to have a certain straight extension (E) where the first end portion (101) has crossed the boundary (220); and to
   - determine a smallest angle (ϕ_{A}, ϕ_{B}) between the forward travelling direction (F) and the extension (E);
   and, if the smallest angle (ϕ_{A}) exceeds a certain threshold value, the control unit (110) is adapted to
   - control the robotic lawn mower (100a) to move back a certain rearward distance (dᵣ) towards the operation area (610) such there is a shortest distance (dₛ) between the center (146) and the boundary (220).
3. The robotic lawn mower (100) according to example 2, wherein, if the smallest angle (ϕ_{B}) falls below the threshold value, the control unit (110) is adapted to position the robotic lawn mower (100a) such that there is a shortest distance (dₛ) between the center (146) and the boundary (220) by furthermore being arranged to
   - control the robotic lawn mower (100a') to move back towards the operation area (610), and, when the robotic lawn mower (100a') has moved a certain extended rearward distance (dᵣₑ) that exceeds the rearward distance (dᵣ), there is a shortest distance (dₛ') between the center (146) and the boundary (220).
4. The robotic lawn mower (100) according to example 2, wherein, if the smallest angle (ϕ_{B}) falls below the threshold value, the control unit (110) is adapted to position the robotic lawn mower (100a) such that there is a shortest distance (dₛ) between the center (146) and the boundary (220) by furthermore being arranged to
   - control the robotic lawn mower (100) to move back towards the operation area (610) such that the smallest angle (ϕ_{C}, ϕ_{D}) between the forward travelling direction (F) and the extension (E), when the first end portion (101) passes the boundary (220), exceeds the threshold value, such that there is a shortest distance (dₛ", dₛ‴) between the center (146) and the boundary (220).
5. The robotic lawn mower (100) according to any one of the previous examples, wherein a center (159) of the cutting arc (210) is positioned along the drive wheel axis (145).
6. The robotic lawn mower (100) according to any one of the previous examples, wherein a center (159) of the cutting arc (210) is positioned in the center (146) of the drive wheel axis (145).
7. The robotic lawn mower (100) according to any one of the previous examples, wherein the cutting arc (210) has an angular extension (ϕ) that exceeds 180°, where the control unit (110) is adapted to control the robotic lawn mower (100d) to continue moving when a second end center (106), constituting a rearmost point, that has followed the extension of the cutting arc (210) has reached an end (212) of the cutting arc (210).
8. The robotic lawn mower (100) according to any one of the previous examples, wherein, when the robotic lawn mower (100) has moved back towards the operation area (610) such that there is a shortest distance (dₛ, dₛ', dₛ", dₛ‴) between the center (146) and the boundary (220), the center (146) is positioned within the operation area (610).
9. The robotic lawn mower (100) according to example 1, wherein the control unit (110) is adapted to position the robotic lawn mower (100a) such that there is a predetermined shortest distance (dₛ) between the center (146) and the boundary (220).
10. The robotic lawn mower (100) according to example 9, wherein the control unit (110) is adapted to position the robotic lawn mower (100a) by means of input derived from a navigation sensor arrangement (175) comprised in the robotic lawn mower (100).
11. The robotic lawn mower (100) according to example 10, wherein the navigation sensor arrangement (175) comprises at least one of
   - satellite signal navigation sensor (175a); and
   - deduced reckoning sensors (175b).
12. The robotic lawn mower (100) according to example 11, wherein the navigation sensor arrangement (175) comprises deduced reckoning sensors (175b) that include visual sensors for Simultaneous Localization And Mapping, SLAM, navigation.
13. The robotic lawn mower (100) according to any one of the examples 10-12, wherein the navigation sensor arrangement (175) is adapted for navigation by means of active local radio beacons using Ultra Wide Band, UWB.
14. The robotic lawn mower (100) according to any one of the previous examples, wherein the robotic lawn mower (100) comprises at least two electric motor arrangements (150, 165), where at least two drive wheels (130a, 130b) have a drive wheel axis (145) with a center (146) and are drivably connected to a first electric motor arrangement (150), where at least one swivelable wheel (131a, 131b) has a corresponding swivel axis (153,154), where a swivel attachment axis (151), running through at least one swivel axis (153,154) and being parallel to the drive wheel axis (145), is positioned between the second end portion (102) and the drive wheel axis (145), and where the first cutting disc (160) is drivably connected to a second electric motor arrangement (165), wherein the first cutting disc (160) at least partly is positioned between the swivel attachment axis (151) and the second end portion (102).
15. The robotic lawn mower (100) according to example 14, wherein the rotation axis (152) is positioned between the swivel attachment axis (151) and the second end portion (102) when the rotation axis (152) passes through the cutting disc (160).
16. The robotic lawn mower (100) according to any one of the previous examples, wherein the robotic lawn mower (100) further comprises a first arcuate protective wall (141) that at least partly runs along the second end portion (102), and at least one further arcuate protective wall (142, 143, 144), the protective walls (141, 142, 143, 144) extending from the body (140) towards the ground (G) during normal running, the protective walls (141, 142, 143, 144) being radially separated.
17. The robotic lawn mower (100) according to example 16, wherein the protective walls (141, 142, 143, 144) partly are positioned between the first cutting disc (160) and the ground (G) during normal running.
18. The robotic lawn mower (100) according to any one of the examples 16 or 17, wherein the protective walls (141, 142, 143, 144) at least mainly follow respective protective wall arcs (141a, 142a, 143a, 144a), where all protective wall arcs (141a, 142a, 143a, 144a) have a common center (146).
19. The robotic lawn mower (100) according to example 18, wherein the common center (146) is the center of a drive wheel axis (145).
20. A method for controlling a robotic lawn mower (100) having a body (140), at least two drive wheels (130a, 130b) that form a pair of drive wheels arranged along a drive wheel axis (145) with a center (146), the center (146) being positioned between the drive wheels (130a, 130b) in the pair, where a first end portion (101) is facing a forward travelling direction (F) and a second end portion (102) is facing a reverse travelling direction (R), wherein, when the robotic lawn mower (100), during grass cutting in an operation area (610), is approaching a boundary (220) of the operation area (610), the method comprises
   positioning (S100) the robotic lawn mower (100a) such that there is a shortest distance (dₛ) between the center (146) and the boundary (220), and
   controlling (S200) the drive wheels (130a, 130b) to turn in mutually different directions such that the second end portion (102) of the robotic lawn mower (100a, 100b, 100c) performs an arcuate movement along a cutting arc (210), enabling the first cutting disc (160) to cut grass within the cutting arc (210),
   where the boundary (220) is positioned between a border (139) and the operation area (610), and where the shortest distance (dₛ) admits the cutting arc (210) to have a closest arc portion (211) that is closest to the border (139) without passing the border (139).
21. The method according to example 20, wherein positioning (S100) the robotic lawn mower (100a) such that there is a shortest distance (dₛ) between the center (146) and the boundary (220) comprises
   controlling (S110) the robotic lawn mower (100) to move towards the boundary (220) such that the first end portion (101) at least partly passes the boundary (220), where the boundary (220) is determined to have a certain straight extension (E) where the first end portion (101) has crossed the boundary (220); and
   determining (S120) a smallest angle (ϕ_{A}, ϕ_{B}) between the forward travelling direction (F) and the extension (E);
      wherein, if (T100) the smallest angle (ϕ_{A}) exceeds a certain threshold value, the method comprises
   controlling (S130) the robotic lawn mower (100a) to move back a certain rearward distance (dᵣ) towards the operation area (610) such there is a shortest distance (dₛ) between the center (146) and the boundary (220).
22. The method according to example 21, wherein, if (T100) the smallest angle (ϕ_{B}) falls below the threshold value, the method comprises
   controlling (S140) the robotic lawn mower (100a') to move back towards the operation area (610), and, when the robotic lawn mower (100a') has moved a certain extended rearward distance (dᵣₑ) that exceeds the rearward distance (dᵣ), there is a shortest distance (dₛ') between the center (146) and the boundary (220).
23. The method according to example 21, wherein, if (T100) the smallest angle (ϕ_{B}) falls below the threshold value, the method comprises
   controlling (S150) the robotic lawn mower (100) to move back towards the operation area (610) such that the smallest angle ((pc, ϕ_{D}) between the forward travelling direction (F) and the extension (E), when the first end portion (101) passes the boundary (220), exceeds the threshold value, such that there is a shortest distance (dₛ", dₛ‴) between the center (146) and the boundary (220)).
24. The method according to any one of the examples 20-23, wherein the boundary is in the form of a boundary wire (220) defining the operation area (610) for the robotic lawn mower (100), where the robotic lawn mower (100) comprises at least two boundary wire sensors (173A, 173B, 173C).
25. The method according to any one of the examples 20-24, wherein a center (159) of the cutting arc (210) is positioned along the drive wheel axis (145).
26. The method according to any one of the examples 20-25, wherein a center (159) of the cutting arc (210) is positioned in the center (146) of the drive wheel axis (145).
27. The method according to any one of the examples 20-26, wherein the cutting arc (210) has an angular extension (ϕ) that exceeds 180°, where the control unit (110) is adapted to control the robotic lawn mower (100d) to continue moving when a second end center (106), constituting a rearmost point, that has followed the extension of the cutting arc (210) has reached an end (212) of the cutting arc (210).
28. The method according to any one of the examples 20-27, wherein, when the robotic lawn mower (100) has moved back towards the operation area (610) such that there is a shortest distance (dₛ, dₛ', dₛ", dₛ‴) between the center (146) and the boundary (220), the center (146) is positioned within the operation area (610).
29. The method according to example 20, wherein the method comprises positioning (S100) the robotic lawn mower (100a) such that there is a predetermined shortest distance (dₛ) between the center (146) and the boundary (220).
30. The method according to example 29, wherein the method comprises positioning (S100) the robotic lawn mower (100a) using (S160) input derived from a navigation sensor arrangement (175) comprised in the robotic lawn mower (100).
31. The method according to example 30, wherein the navigation sensor arrangement (175) uses at least one of
   - satellite signal navigation sensor (175a); and
   - deduced reckoning sensors (175b).
32. The method according to example 31, wherein the navigation sensor arrangement (175) uses deduced reckoning sensors (175b) that include visual sensors for Simultaneous Localization And Mapping, SLAM, navigation.
33. The method according to any one of the examples 30-32, wherein the navigation sensor arrangement (175) is used for navigation by means of active local radio beacons using Ultra Wide Band, UWB.
34. A control unit arrangement (110) adapted to execute the method according to any one of the examples 20-33.
35. A computer program product (400) comprising computer executable instructions (410) stored on media (420) to execute the method according to any one of the examples 20-33.

## Claims

1. A robotic lawn mower (100) comprising a body (140), at least two drive wheels (130a, 130b) that form a pair of drive wheels arranged along a drive wheel axis (145) with a center (146), the center (146) being positioned between the drive wheels (130a, 130b) in the pair, the robotic lawn mower (100) further comprising at least one swivelable wheel (131a, 131b), a control unit (110) adapted to control the operation of the robotic lawn mower (100), at least a first rotatable grass cutting disc (160) having a rotation axis (152), where a first end portion (101) is facing a forward travelling direction (F) and a second end portion (102) is facing a reverse travelling direction (R), wherein, when the robotic lawn mower (100), during grass cutting in an operation area (610), is approaching a boundary (220) of the operation area (610), the control unit (110) is adapted to
- position the robotic lawn mower (100a) such that there is a shortest distance (dₛ) between the center (146) and the boundary (220), and to
- control the drive wheels (130a, 130b) to turn in mutually different directions such that the second end portion (102) of the robotic lawn mower (100a, 100b, 100c) performs an arcuate movement along a cutting arc (210), enabling the first cutting disc (160) to cut grass within the cutting arc (210),
where the boundary (220) is positioned between a border (139) and the operation area (610), and where the shortest distance (dₛ) admits the cutting arc (210) to have a closest arc portion (211) that is closest to the border (139) without passing the border (139).

2. The robotic lawn mower (100) according to claim 1, wherein the control unit (110) is adapted to position the robotic lawn mower (100a) such that there is a shortest distance (dₛ) between the center (146) and the boundary (220) by furthermore being arranged to
- control the robotic lawn mower (100) to move towards the boundary (220) such that the first end portion (101) at least partly passes the boundary (220), where the boundary (220) is determined to have a certain straight extension (E) where the first end portion (101) has crossed the boundary (220); and to
- determine a smallest angle (ϕ_{A}, ϕ_{B}) between the forward travelling direction (F) and the extension (E);
and, if the smallest angle (ϕ_{A}) exceeds a certain threshold value, the control unit (110) is adapted to
- control the robotic lawn mower (100a) to move back a certain rearward distance (dᵣ) towards the operation area (610) such there is a shortest distance (dₛ) between the center (146) and the boundary (220).

3. The robotic lawn mower (100) according to claim 2, wherein, if the smallest angle (ϕ_{B}) falls below the threshold value, the control unit (110) is adapted to position the robotic lawn mower (100a) such that there is a shortest distance (dₛ) between the center (146) and the boundary (220) by furthermore being arranged to
- control the robotic lawn mower (100a') to move back towards the operation area (610), and, when the robotic lawn mower (100a') has moved a certain extended rearward distance (dᵣₑ) that exceeds the rearward distance (dᵣ), there is a shortest distance (dₛ') between the center (146) and the boundary (220).

4. The robotic lawn mower (100) according to claim 2, wherein, if the smallest angle (ϕ_{B}) falls below the threshold value, the control unit (110) is adapted to position the robotic lawn mower (100a) such that there is a shortest distance (dₛ) between the center (146) and the boundary (220) by furthermore being arranged to
- control the robotic lawn mower (100) to move back towards the operation area (610) such that the smallest angle (ϕ_{C}, ϕ_{D}) between the forward travelling direction (F) and the extension (E), when the first end portion (101) passes the boundary (220), exceeds the threshold value, such that there is a shortest distance (dₛ", dₛ‴) between the center (146) and the boundary (220).

5. The robotic lawn mower (100) according to any one of the previous claims, wherein a center (159) of the cutting arc (210) is positioned along the drive wheel axis (145).

6. The robotic lawn mower (100) according to any one of the previous claims, wherein a center (159) of the cutting arc (210) is positioned in the center (146) of the drive wheel axis (145).

7. The robotic lawn mower (100) according to any one of the previous claims, wherein the cutting arc (210) has an angular extension (ϕ) that exceeds 180°, where the control unit (110) is adapted to control the robotic lawn mower (100d) to continue moving when a second end center (106), constituting a rearmost point, that has followed the extension of the cutting arc (210) has reached an end (212) of the cutting arc (210).

8. The robotic lawn mower (100) according to any one of the previous claims, wherein, when the robotic lawn mower (100) has moved back towards the operation area (610) such that there is a shortest distance (dₛ, dₛ', dₛ", dₛ‴) between the center (146) and the boundary (220), the center (146) is positioned within the operation area (610).

9. The robotic lawn mower (100) according to claim 1, wherein the control unit (110) is adapted to position the robotic lawn mower (100a) such that there is a predetermined shortest distance (dₛ) between the center (146) and the boundary (220).

10. The robotic lawn mower (100) according to claim 9, wherein the control unit (110) is adapted to position the robotic lawn mower (100a) by means of input derived from a navigation sensor arrangement (175) comprised in the robotic lawn mower (100).

11. The robotic lawn mower (100) according to claim 10, wherein the navigation sensor arrangement (175) comprises at least one of
- satellite signal navigation sensor (175a); and
- deduced reckoning sensors (175b).

12. The robotic lawn mower (100) according to claim 11, wherein the navigation sensor arrangement (175) comprises deduced reckoning sensors (175b) that include visual sensors for Simultaneous Localization And Mapping, SLAM, navigation.

13. The robotic lawn mower (100) according to any one of the claims 10-12, wherein the navigation sensor arrangement (175) is adapted for navigation by means of active local radio beacons using Ultra Wide Band, UWB.

14. The robotic lawn mower (100) according to any one of the previous claims, wherein the robotic lawn mower (100) comprises at least two electric motor arrangements (150, 165), where at least two drive wheels (130a, 130b) have a drive wheel axis (145) with a center (146) and are drivably connected to a first electric motor arrangement (150), where at least one swivelable wheel (131a, 131b) has a corresponding swivel axis (153,154), where a swivel attachment axis (151), running through at least one swivel axis (153,154) and being parallel to the drive wheel axis (145), is positioned between the second end portion (102) and the drive wheel axis (145), and where the first cutting disc (160) is drivably connected to a second electric motor arrangement (165), wherein the first cutting disc (160) at least partly is positioned between the swivel attachment axis (151) and the second end portion (102).

15. The robotic lawn mower (100) according to claim 14, wherein the rotation axis (152) is positioned between the swivel attachment axis (151) and the second end portion (102) when the rotation axis (152) passes through the cutting disc (160).

16. The robotic lawn mower (100) according to any one of the previous claims, wherein the robotic lawn mower (100) further comprises a first arcuate protective wall (141) that at least partly runs along the second end portion (102), and at least one further arcuate protective wall (142, 143, 144), the protective walls (141, 142, 143, 144) extending from the body (140) towards the ground (G) during normal running, the protective walls (141, 142, 143, 144) being radially separated.

17. The robotic lawn mower (100) according to claim 16, wherein the protective walls (141, 142, 143, 144) partly are positioned between the first cutting disc (160) and the ground (G) during normal running.

18. The robotic lawn mower (100) according to any one of the claims 16 or 17, wherein the protective walls (141, 142, 143, 144) at least mainly follow respective protective wall arcs (141a, 142a, 143a, 144a), where all protective wall arcs (141a, 142a, 143a, 144a) have a common center (146).

19. The robotic lawn mower (100) according to claim 18, wherein the common center (146) is the center of a drive wheel axis (145).

20. A method for controlling a robotic lawn mower (100) having a body (140), at least two drive wheels (130a, 130b) that form a pair of drive wheels arranged along a drive wheel axis (145) with a center (146), the center (146) being positioned between the drive wheels (130a, 130b) in the pair, where a first end portion (101) is facing a forward travelling direction (F) and a second end portion (102) is facing a reverse travelling direction (R), wherein, when the robotic lawn mower (100), during grass cutting in an operation area (610), is approaching a boundary (220) of the operation area (610), the method comprises
positioning (S100) the robotic lawn mower (100a) such that there is a shortest distance (dₛ) between the center (146) and the boundary (220), and
controlling (S200) the drive wheels (130a, 130b) to turn in mutually different directions such that the second end portion (102) of the robotic lawn mower (100a, 100b, 100c) performs an arcuate movement along a cutting arc (210), enabling the first cutting disc (160) to cut grass within the cutting arc (210),
where the boundary (220) is positioned between a border (139) and the operation area (610), and where the shortest distance (dₛ) admits the cutting arc (210) to have a closest arc portion (211) that is closest to the border (139) without passing the border (139).
